# EUROPÄISCHE PATENTSCHRIFT

(11) **EP 0 556 572 B1**
(45) Veröffentlichungstag und Bekanntmachung des Hinweises auf die Patenterteilung: **17.05.1995**
(21) Anmeldenummer: 93100689.4
(22) Anmeldetag: 19.01.1993
(51) Int. Cl.: F16L 3/22

(54) **Sammelhalterung für Kabel, Rohre od. dgl.**
Holding device for cables, pipes or the like
Maintien pour des câbles, tuyaux ou analogues

(30) Priorität: 04.02.1992 DE 4203064
(43) Veröffentlichungstag der Anmeldung: 25.08.1993
(73) Patentinhaber: Hermann Kleinhuis GmbH. & Co. KG, D-58507 Lüdenscheid (DE)
(72) Erfinder: Mayer, Dieter, W-5880 Lüdenscheid (DE)
(74) Vertreter: Buse, Karl Georg, Dipl.-Phys.

(56) Entgegenhaltungen:
- DE-A- 3 603 304
- DE-U- 1 845 448
- DE-U- 9 109 806

## Beschreibung

Die Erfindung bezieht sich auf eine Sammelhalterung für Kabel, Rohre od.dgl., bestehend aus einem einteiligen, vorzugsweise aus Kunststoff gefertigten, zu einem Ring schließbaren Bügel, der mindestens einen Befestigungsteil zum Anbringen der Sammelhalterung an einer Wand oder einer Decke aufweist, wobei der Bügel wenigstens einen beweglichen Teil hat, der an seinem freien Ende in einen Verrastungshaken übergeht, der zum Schließen des Ringes in eine Öse der Sammelhalterung einführbar ist, und bei dem der Bügel einen Entriegelungshaken zum Öffnen des Ringes aufweist, und bei dem der Verrastungshaken mit dem derjenigen Begrenzungswand der Sammelhalterung, mit der der bewegliche Teil verbunden ist, zugekehrten Quersteg der Öse zusammenwirkt.

Eine derartige Sammelhalterung ist durch die DE 36 03 304 A1 bekanntgeworden. Hierbei ist die Innenseite des Hakenmaules mindestens annähernd dem Schwenkweg des Hakens folgend angeordnet. Es ist ferner am Haken mindestens eine federnd nachgiebige, beim Einschwenken des Hakens in die Öse von den Randteilen letzterer vorübergehend zurückdrängbare und die Öse formschließend hinterfassende Raste abgeordnet. Bei der bevorzugten Ausführungsform dieser bekannten Sammelhalterung schließen der Haken und der Hakenschaft einen Winkel von etwa 85° miteinander ein, und an der Hakenspitze ist eine mit der öse zusammenwirkende und den Haken anhebende Auflauframpe angeordnet.

An dem freien Endteil des Hakens schließt sich ein diesem etwa entgegengesetzt gerichteter abgebogener Finger an, der mit Abstand zum Hakenrücken angeordnet ist, und der gegen Federkraft zum Hakenrücken hin abbiegbar ist. An der dem Hakenrücken abgewandten Seite weist er eine hinter dem gegenüberliegenden Rand der Öse formschließend einsprengbare Rastnase mit einer mit dem gegenüberliegenden Rand der Öse zusammenwirkenden Auflauframpe auf. Diese bekannte Ausführungsform der Sammelhalterung ist insoweit vorteilhaft, als sie mit einem Entriegelungshaken ausgestattet ist, der dem Öffnen des Ringes dient. Es kann somit ein Spalt gebildet werden, durch welchen die Leitungen, Rohre od.dgl. in den Innenraum überführt werden sollen. Auf der anderen Seite hat die Praxis gezeigt, daß die vorgesehene Ausbildung sowohl des Verrastungshakens als auch des Entriegelungshakens der Sammelhalterung Nachteile mit sich bringt. Diese Nachteile ergeben sich insbesondere dadurch, daß die Raste nicht mit der in Richtung auf die untere Seitenwand der Sammelhalterung zeigenden Begrenzungswand der Öse, sondern mit der oberen Begrenzungswand zusammenwirkt. Daher ist es zum Überführen des Entriegelungshakens in die Öffnungsstellung erforderlich, auf den Finger der Sammelhalterung eine Zugkraft auszuüben. Dies ist jedoch schwierig, weil die Sammelhalterungen bekanntlich sehr hoch an den Wandungen eines Raumes oder sogar an der Decke angeordnet sind. Daher verbleibt kaum Zwischenraum zwischen der Decke und dem Finger, was zur Folge hat, daß ein Betätigungselement nur schwer in diesem schmalen Raum eingeführt und damit eine Zugkraft auf den Finger ausgeübt werden kann.

Bei einer offenkundig vorbenutzten Ausführungsform einer Sammelhalterung für Kabel, Rohre od.dgl. der eingangs genannten Art fehlt ein Entriegelungshaken. Zwar hat diese bekannte Ausführungsform der Sammelhalterung den Vorteil, daß der Verrastungshaken der am freien Ende des beweglichen Teiles der Sammelhalterung angeordnet ist, mit dem nach unten weisenden Wandungsteil der Öse zusammenwirkt, jedoch ergibt sich durch das Fehlen des Entriegelungshakens der Nachteil, daß der Verrastungshaken nur sehr schwer in seine Öffnungslage überführt werden kann. Schwierigkeiten ergeben sich insbesondere dann, wenn der Aufnahmeraum der Sammelhalterung praktisch ganz mit Kabel, Rohren od.dgl. gefüllt ist.

Der vorliegenden Erfindung liegt die Aufgabe zugrunde, Sammelhalterungen für Kabel, Rohre od.dgl. der eingangs näher gekennzeichneten Art weiter zu verbessern. Dabei soll von der zuletzt genannten Ausführungsform der Sammelhalterung ausgegangen werden. Diese ist aber so zu verbessern, daß auch ein leichtes Überführen des Verrastungshakens in die Freigabestellung möglich ist. Zur Lösung dieser Aufgabe wird erfindungsgemäß vorgeschlagen, daß der Entriegelungshaken des beweglichen Teiles der Sammelhalterung anhebbar und dadurch der Verrastungshaken in seine Öffnungslage überführbar ist.

Die erfindungsgemäß ausgebildete Sammelhalterung hat gegenüber den beiden vorstehend genarnten Ausführungsformen von Sammelhalterungen erhebliche Vorteile. So wirkt der Verrastungshaken mit dem der unteren Begrenzungswand der Sammelhalterung zugekehrten Quersteg der Öse zusammen. Diese Sperr- oder Verriegelungslage des beweglichen Teiles der Sammelhalterung kann in einfachster Weise durch Anheben aufgehoben werden. Es wird daher zum öffnen des Verrastungshakens nicht mehr wie bisher eine Zugkraft, sondern eine Druckkraft, und zwar von unten, auf den Entriegelungshaken ausgeübt. Durch die von unten her erfolgende Druckkraft, die auf den Entriegelungshaken einwirkt, spielt der Zwischenraum zwischen dem Haken und der Decke der Wand keine Rolle mehr. Das Ausüben der Druckkraft zum Zweck des Entriegelns des Entriegelungshakens kann durch eine Stange erfolgen, die in aller Regel auf einer Baustelle vorhanden ist; dabei kann es sich beispielsweise um ein stangenförmiges Isolierrohr od.dgl. handeln. Mit einem solchen Isolierrohr kann von unten her auf den Entriegelungshaken eine Druckkraft ausgeübt werden, um dadurch den Verrastungshaken in seine unwirksame Lage zu überführen.

Bei der bevorzugten Ausführungsform der Erfindung sind der Verrastungshaken und der Entriegelungshaken am freien Ende des beweglichen Teiles der Sammelhalterung derart angeordnet, daß sie nach entgegengesetzten Richtungen zeigen. Dabei ist der Entriegelungshaken im Querschnitt gesehen etwa V-förmig gestaltet und zeigt mit seiner Öffnung in Richtung auf die untere Begrenzungswand der Sammelhalterung. Durch die V-förmige Gestaltung ergibt sich ein leichtes Einführen einer Stange od.dgl. Diese Stange kann bis zum Grund des V's eingeführt werden. Dieser Grund des V's bildet daher das Widerlager für die zum Anheben des Entriegelungshakens erforderliche Kraft.

Nach einem anderen Vorschlag der Erfindung ist an der oberen Begrenzungskante der Öse der Sammelhalterung eine den Verrastungshaken in Richtung auf den unteren Quersteg belastende Führungsnase angeordnet. Diese Führungsnase wirkt mit der ihr zugekehrten Oberfläche des Verrastungshakens zusammen. Es wird dadurch eine Kraft auf den Verrastungshaken ausgeübt, die den Verrastungshaken in seine Verrastungsstellung drückt.

Dabei ist es zusätzlich zweckmäßig, daß der Verrastungshaken einen mit der Führungsnase beim Einführen in die Öse zusammenwirkenden Vorsprung aufweist. Auf diese Weise wird die Einwirkfläche der Kraft vergrößert.

Nach einem anderen Vorschlag der Erfindung weist der bewegliche Teil der Sammelhalterung,unterhalb des Verrastungshakens liegend, einen vorzugsweise als Langloch ausgebildeten Durchbruch auf.

Bei geschlossener Sammelhalterung fluchtet dieser Durchbruch des beweglichen Teiles der Sammelhalterung mit einem weiteren Durchbruch der aufrechten Befestigungswand. Es ist daher möglich, daß man im Bedarfsfalle durch den Durchbruch des beweglichen Teiles der Sammelhalterung ein Werkzeug hindurchführt, um mit dem Haltemittel der Sammelhalterung in Wirkkontakt zu kommen.

Es empfiehlt sich, die Sammelhalterung in ihrer unteren Begrenzungswand einen freigelassenen Bereich aufweisen zu lassen, der mit einer Durchbrechung in der waagerechten oberen Begrenzungswand der Sammelhalterung fluchtet. Dabei ist bevorzugt vorgesehen, daß sich sowohl der freigelassene Bereich als auch die Durchbrechung in die aufrechte Befestigungswand der Sammelhalterung fortsetzen.

Zweckmäßig ist es dabei, in an sich bekannter Weise die Fortsetzung der Durchbrechung in eine Erweiterung auslaufen zu lassen.

In den Figuren der Zeichnungen ist die Erfindung in einem Ausführungsbeispiel dargestellt, und zwar zeigen:
- Fig. 1: die erfindungsgemäß ausgebildete Sammelhalterung für Kabel, Rohre od.dgl. in Seitenansicht in der Öffnungslage des beweglichen Teiles (dies ist die Beschickungslage für die Sammelhalterung),
- Fig. 2: die Stirnansicht der Sammelhalterung gemäß der Fig. 1 der Zeichnung,
- Fig. 3: eine Draufsicht auf die Sammelhalterung gemäß der Fig. 1 der Zeichnung,
- Fig. 4: einen Längsschnitt durch die Sammelhalterung der Fig. 1 der Zeichnung,
- Fig. 5: einen weiteren Schnitt durch die Sammelhalterung gemäß der Fig. 1 der Zeichnung, teilweise weggebrochen, teilweise in Ansicht,
- Fig. 6: eine Teilansicht des Bereiches VI des beweglichen Teiles der Sammelhalterung gemäß der Fig. 4 der Zeichnung,
- Fig. 7: einen Schnitt durch die Sammelhalterung gemäß den Fig. 1 und 4, jedoch nach dem Überführen des beweglichen Teiles der Sammelhalterung in seiner Arbeits- oder Endlage.

Es sei zunächst erwähnt, daß in den Figuren der Zeichnungen nur diejenigen Teile der Sammelhalterung dargestellt sind, die für das Verständnis der Erfindung Bedeutung haben. So ist insbesondere offengelassen, ob, was grundsätzlich möglich ist, die Befestigung der Sammelhalterung an einer aufrechten Wand eines Raumes oder an dessen Decke erfolgt. Daher sind auch die Befestigungsmittel für die Sammelhalterung in den Zeichnungen fortgelassen. Es sei jedoch erwähnt, daß für die Befestigung der Sammelhalterung sowohl an der Wandung eines Raumes als auch an der Decke bekannte Befestigungsmittel eingesetzt werden können. Ferner sind in den Zeichnungen die Kabel, Rohre od.dgl. fortgelassen, die im Aufnahmeraum der Sammelhalterung untergebracht werden sollen. Hierbei kann es sich um grundsätzlich bekannte Rohre, Kabel, Leitungen od.dgl. handeln.

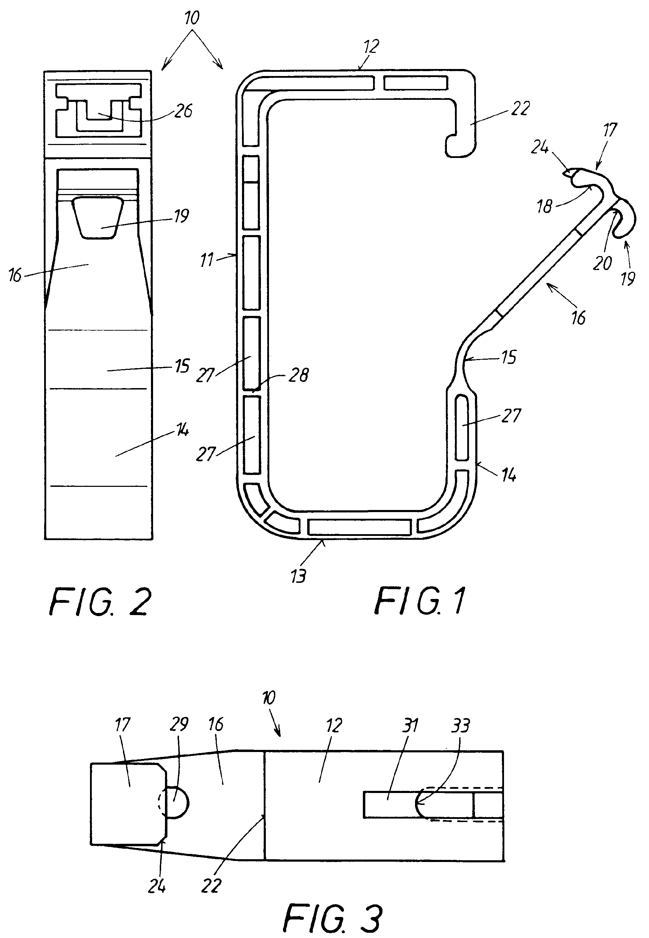

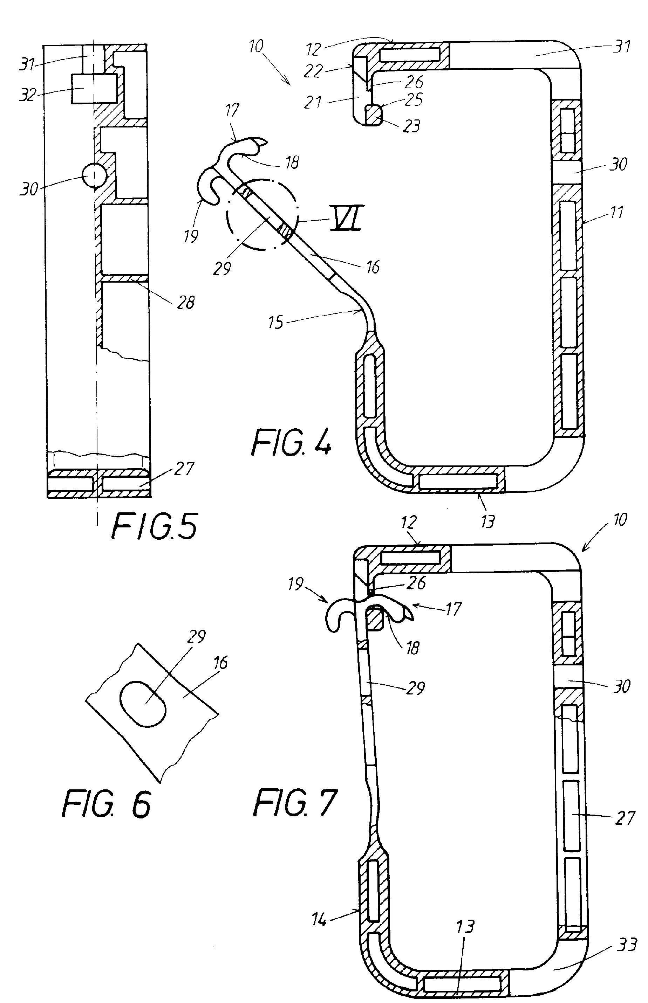

Die dem Ausführungsbeispiel zugrunde gelegte Sammelhalterung für Kabel, Rohre od.dgl. ist generell mit 10 bezeichnet. Es handelt sich dabei um einen einteiligen, aus Kunststoff gefertigten, zu einem Ring schließbaren Bügel, der in der Schließlage gemäß der Fig. 7 der Zeichnung in Draufsicht gesehen etwa rechteckige Gestalt aufweist. Die Sammelhalterung 10 hat eine aufrechte Befestigungswand 11. Quer dazu ist einmal eine waagerechte Befestigungswand 12 und zum anderen eine untere Begrenzungswand 13 angeordnet, wobei der Übergang von der aufrechten Befestigungswand zu den waagerechten Wänden über einen nicht näher gekennzeichneten gekrümmten Zwischenbereich erfolgt. An die untere Begrenzungswand 13 schließt sich eine aufrechte Teilbegrenzungswand 14 an, die im Abstand und parallel zur aufrechten Befestigungswand 11 angeordnet ist, jedoch wesentlich kürzer gehalten ist. Die aufrechte Teilbegrenzungswand 14 geht über in einen eingeschnürten Bereich 15, der die Funktion eines Scharniers, wie eines Filmscharniers, hat. An den eingeschnürten Bereich 15 schließt sich der bewegliche Teil 16 an. Am vorderen Ende des beweglichen Teiles 16 ist einmal ein Verrastungshaken 17 und zum anderen ein Entriegelungshaken 19 vorgesehen. Diese zeigen, wie die Fig. 1 erkennen läßt, nach unterschiedlichen Richtungen.

Senkrecht zur waagerechten Befestigungswand 12 und parallel und im Abstand zur aufrechten Befestigungwand 11 ist eine Ösenwand 22 vorgesehen, die einen unteren Quersteg 23 aufweist - vergleiche dazu die Fig. 4 und 7 der Zeichnungen -. In der Ösenwand 22 ist auch die Öse 21 angeordnet, die in der Schließlage des beweglichen Teiles mit dem Verrastungshaken 17 des beweglichen Teiles 16 der Sammelhalterung 10 zusammenwirkt. Diesem Zusammenwirken dient eine Rast 18, die dem Verrastungshaken 17 unmittelbar angeformt ist.

Aus der Fig. 7 der Zeichnung ist ersichtlich, daß der Verrastungshaken 17 mit dem der unteren Begrenzungswand 13 der Sammelhalterung 10 zugekehrten Quersteg 23 der Öse 21 zusammenwirkt. Es ist ferner erkennbar, daß der bewegliche Teil 16 der Sammelhalterung 10 einen durch Anheben lageveränderlichen und damit in seine Öffnungslage überführbaren Entriegelungshaken 19 hat. Dieser Entriegelungshaken ist im Querschnitt gesehen etwa V-förmig gestaltet. Der Grund des Entriegelungshakens ist mit 20 bezeichnet; er dient als Widerlager zur Erzeugung einer Druckkraft zum Entriegeln des Entriegelungshakens 19. In die Öffnung des Entriegelungshakens 19 kann z.B. das vordere Ende einer Stange eingeführt werden, und zwar soweit, bis die Stirnfläche dieser Stange mit dem Grund 20 des Entriegelungshakens in Wirkverbindung tritt. Dann ist es möglich, eine Druckkraft auf den Entriegelungshaken 19 auszuüben, um damit ein leichtes Anheben zu erzielen, und um damit den beweglichen Teil 16 aus der in der Fig. 7 dargestellten Schließlage in die in der Fig. 4 gezeichnete Öffnungslage zu überführen. In letzterer ist zwischen dem beweglichen Teil 16 bzw. dem Verrastungshaken 17 und der Ösenwand 22 ein nicht näher bezeichneter Spalt vorhanden, durch den ein Einbringen von Rohren, Kabeln od.dgl. in den Aufnahmeraum der Sammelhalterung 10 erfolgen kann.

Aus den Fig. 4 und 7 der Zeichnungen ist zu erkennen, daß an der oberen Begrenzungskante der Öse 21 der Sammelhalterung 10 eine den Verrastungshaken 17 in Richtung auf den unteren Quersteg 23 belastende Führungsnase 26 angeordnet ist. Dabei hat der Verrastungshaken ferner einen mit der Führungsnase 26 beim Einführen in die Öse 21 zusammenwirkenden Vorsprung 24. Die Führungsnase 26 ist leicht elastisch gehalten, was durch entsprechende Ausbildung ihrer Wandstärke möglich ist.

Die Fig. 4 und 6 der Zeichnungen lassen ferner erkennen, daß der bewegliche Teil 16 der Sammelhalterung 10 unterhalb des Verrastungshakens 17 liegend einen Durchbruch 29 aufweist; dieser ist im gewählten Ausführungsbeispiel als Langloch gestaltet. Bei geschlossener Sammelhalterung - vergleiche dazu die Fig. 7 der Zeichnung - fluchtet der Durchbruch 29 des beweglichen Teiles 16 der Sammelhalterung 10 mit einem weiteren Durchbruch 30 der aufrechten Befestigungswand 11 der Sammelhalterung 10. Der weitere Durchbruch 30 ist im Querschnitt kreisförmig gestaltet. Durch den Durchbruch 29 des beweglichen Teiles 16 der Sammelhalterung 10 kann somit ein Werkzeug, zum Beispiel ein Schraubendreher, hindurchgeführt werden, um mit dem nicht dargestellten Befestigungsmittel für die Sammelhalterung zusammenwirken zu können.

Aus den Fig. 4 und 7 der Zeichnungen ist ferner erkennbar, daß die Sammelhalterung 10 in ihrer unteren Begrenzungswand 13 einen freigelassenen Bereich 33 aufweist. Dieser freigelassene Bereich setzt sich in der aufrechten Begrenzungswand 11 fort.

Auch die obere Befestigungswand 12 hat einen mit 31 bezeichneten Durchbruch, der sich ebenfalls in die aufrechte Begrenzungswand 11 fortsetzt. Die Fortsetzung der Durchbrechung 31 läuft in eine Erweiterung 32 aus, diese ist - vergleiche dazu die Fig. 5 der Zeichnung - in Draufsicht gesehen etwa rechteckig gestaltet. Der freigelassene Bereich 33 sowie die Durchbrechung 31 der Sammelhalterung sind so angeordnet, daß sie mindestens bereichsweise miteinander fluchten.

Wie bereits erwähnt, ist die dargestellte Ausführung nur eine beispielsweise Verwirklichung der Erfindung und diese nicht darauf beschränkt. Vielmehr sind noch mancherlei weitere Ausführungen und Anwendungen möglich. Dies gilt insbesondere für die Ausbildung und die Gestalt sowohl des Verrastungshakens 17 als auch des Entriegelungshakens 19. Diese können eine andere als die dargestellte Querschnittsgestalt erhalten, auch können sie in ihren Abmessungen verändert werden. Dies gilt auch für die Ausbildung und Gestalt der Führungsnase 26, die in die Öse 21 hineinragt, um mit der Oberseite des Verrastungshakens 17 in Wirkverbindung treten zu können.

Nachzutragen bleibt noch, daß in den Wänden der Sammelhalterung 10 in grundsätzlich bekannter Weise Hohlräume 27 angeordnet sind. Diese Hohlräume 27 sind nach vorne hin offen und durch Querstege 28 voneinander getrennt. Die Hohlräume 27 können untereinander gleich gestaltet sein, es ist aber auch möglich, ihnen unterschiedliche Querschnittsgestaltungen und Abmessungen zu geben.

### Bezugszeichenliste:

- 10: Sammelhalterung
- 11: aufrechte Befestigungswand (von 10)
- 12: waagerechte Befestigungswand (von 10)
- 13: untere Begrenzungswand (von 10)
- 14: aufrechte Teilbegrenzungswand (von 10)
- 15: eingeschnürter Bereich
- 16: beweglicher Teil (von 10)
- 17: Verrastungshaken
- 18: Rast (an 17)
- 19: Entriegelungshaken
- 20: Grund (Boden) von 19
- 21: Öse
- 22: Ösenwand (senkrecht zu 12)
- 23: unterer Quersteg
- 24: Vorsprung
- 25: Gegenrast (für 17)
- 26: Führungsnase
- 27: Hohlraum
- 28: Quersteg
- 29: Durchbruch (in 16)
- 30: weiterer Durchbruch (in 11)
- 31: Durchbrechung (in 11 u. 12)
- 32: Erweiterung (von 31 in 11)
- 33: freigelassener Bereich (in 11 u. 13)

## Patentansprüche

1. Sammelhalterung für Kabel, Rohre od.dgl., bestehend aus einem einteiligen, vorzugsweise aus Kunststoff gefertigten, zu einem Ring schließbaren Bügel (1), der mindestens einen Befestigungsteil (2) zum Anbringen der Sammelhalterung an einer Wand oder einer Decke aufweist, wobei der Bügel (1) wenigstens einen beweglichen Teil (16) hat, der an seinem einen Ende in einen Verrastungshaken (6) übergeht, der zum Schließen des Ringes in eine Öse (21) der Sammelhalterung einführbar ist, und bei der der Bügel (1) einen Entriegelungshaken (19) zum Öffnen des Ringes aufweist, und bei dem der Verrastungshaken (17) mit dem derjenigen Begrenzungswand (13) der Sammelhalterung (10), mit der der bewegliche Teil verbunden ist, zugekehrten Quersteg (23) der Öse (21) zusammenwirkt,
**dadurch gekennzeichnet**,
daß der Entriegelungshaken (19) des beweglichen Teiles (16) der Sammelhalterung (10) anhebbar und dadurch der Verrastungshaken (17) in seine Öffnungslage überführbar ist.

2. Sammelhalterung nach Anspruch 1, dadurch gekennzeichnet, daß der Verrastungshaken (17) und der Entriegelungshaken (19) am freien Ende des beweglichen Teiles (16) der Sammelhalterung (10) derart angeordnet sind, daß sie nach entgegengesetzten Richtungen zeigen, und daß der Entriegelungshaken (19) im Querschnitt gesehen etwa V-förmig gestaltet ist und mit seiner Öffnung in Richtung auf die Begrenzungswand (13) der Sammelhalterung (10) zeigt.

3. Sammelhalterung nach Anspruch 1 und 2, dadurch gekennzeichnet, daß an der oberen Begrenzungskante der Öse (21) der Sammelhalterung (10) eine den Verrastungshaken (17) in Richtung auf den unteren Quersteg (23) belastende Führungsnase (26) angeordnet ist.

4. Sammelhalterung nach Anspruch 3, dadurch gekennzeichnet, daß der Verrastungshaken (17) einen mit der Führungsnase (26) beim Einführen in die Öse (21) zusammenwirkenden Vorsprung (24) aufweist.

5. Sammelhalterung nach einem oder mehreren der vorangehenden Ansprüche, dadurch gekennzeichnet, daß der bewegliche Teil (16) der Sammelhalterung (10) unterhalb des Verrastungshakens (17) liegend einen vorzugsweise als Langloch ausgebildeten Durchbruch (29) aufweist.

6. Sammelhalterung nach Anspruch 5, dadurch gekennzeichnet, daß bei geschlossener Sammelhalterung (10) der Durchbruch (29) des beweglichen Teiles (16) der Sammelhalterung (10) mit einem weiteren Durchbruch (30) der gegenüberliegenden Befestigungswand (11) der Sammelhalterung (10) fluchtet. (Fig. 7)

7. Sammelhalterung nach Anspruch 1 und 2, dadurch gekennzeichnet, daß der Grund (20) des Entriegelungshakens (19) als Widerlager zur Erzeugung einer Druckkraft zur Entriegelung des Entriegelungshakens (19) benutzbar ist.

8. Sammelhalterung nach einem oder mehreren der vorangehenden Ansprüche, dadurch gekennzeichnet, daß die Sammelhalterung (10) in der Begrenzungswand (13) einen freigelassenen Bereich (33) aufweist, der mit einer Durchbrechung (31) in einer waagerechten genenüberliegenden Begrenzungswand (12) der Sammelhalterung (10) fluchtet.

9. Sammelhalterung nach Anspruch 8, dadurch gekennzeichnet, daß sich sowohl der freigelassene Bereich (33) als auch die Durchbrechung (31) in die Befestigungswand (11) fortsetzen.

10. Sammelhalterung nach Anspruch 8 und 9, dadurch gekennzeichnet, daß die Fortsetzung der Durchbrechung (31) in eine Erweiterung (32) ausläuft. (Fig. 5)

## Claims

1. Holding device for cables, pipes, etc., consisting of a one-part preferably plastic shackle which may be closed to form a ring (1) which features at least one fastening element (2) to attach the holding device to a wall or a ceiling; the shackle (1) features at least one movable element (16), which at one end features a latching hook (6) which may be inserted into a eyelet hole (21) in the holding device to close the ring; and said shackle (1) features an unlatching hook (19) to open the ring and for which the unlatching hook (17) concurs with the lateral fin (23) of the eyelet (21) facing the wall (13) of the holding device (10) which is connected to the movable part,
and characterized in such a fashion,
that the unlatching hook (19) of the movable part (16) of the holding device (10) may be lifted and subsequently the latching hook (17) may be moved into its open position.

2. Holding device in compliance with claim 1, characterized by the latching hook (17) and the unlatching hook (19) at the free end of the movable part (16) of the holding device (10) being arranged in such a fashion, that they point in opposite directions, and that the unlatching hook (19) in cross-section perspective is approximately V-shaped with the opening facing the limitation wall (13) of the holding device (10).

3. Holding device in compliance with claims 1 and 2 characterized by a guide fin (26) located at the upper edge of the eyelet (21) of the holding device (10) pushing the latching hook (17) towards the lower lateral fin (23).

4. Holding device in compliance with claim 3 characterized by a ledge (24) at the latching hook (17) concurring with the guide rim (26) when introduced into the eyelet (21).

5. Holding device in compliance with one or several of the above mentioned claims characterized by the movable element (16) of the holding device (10) having a opening (29) preferably in form of a longitudinal hole located under the latching hook (17).

6. Holding device in compliance with claim 5 characterized by, in case of closed holding device (10), the opening (29) in the movable part (16) of the holding device (10) being in alignment with another opening (30) in the opposite mounting wall (11) of the holding device (10) (fig. 7).

7. Holding device in compliance with claims 1 and 2 characterized by the base (20) of the unlatching hook (19) being useable as abutment for exercising pressure to unlatch the unlatching hook (19).

8. Holding device in compliance with one or several of the above mentioned claims characterized by the holding device (10) featuring a vacated sector (33) in the limitation wall (13), which is in alignment with an opening (31) in the opposite limitation wall (12).

9. Holding device in compliance with claim 8 characterized by the vacated sector (33) as well as the opening (31) continuing into the mounting wall (11).

10. Holding device in compliance with claims 8 and 9 characterized by the continuation of the opening (31) extending into an expansion (32) (fig. 5).

## Revendications

1. Support de groupage pour des câbles, tubes ou analogues, composée d'un étrier (1) monopièce, fabriqué de préférence en matière plastique, pouvant être fermé en constituant un anneau et présentant au moins une partie de fixation (2) destinée au montage du support de groupage sur un mur ou un plafond, l'étrier (1) ayant au moins une partie mobile (16), se transformant à une de ses extrémités en un crochet d'encliquetage (6) pouvant être introduit dans un oeillet (21) du support de groupage pour fermer l'anneau, l'étrier (1) du support de groupage présentant un crochet de déverrouillage (19) destiné à l'ouverture de l'anneau et anneau pour lequel le crochet d'encliquetage (17) coopère avec la nervure transversale (23) d'oeillet (21) tournée vers la paroi de délimitation (13) du support de groupage (10) avec laquelle la partie mobile est reliée, caractérisée en ce que le crochet de déverrouillage (19) de la partie mobile (16) du support de groupage (10) peut être soulevé, faisant de ce fait passer le crochet d'encliquetage (17) dans sa position d'ouverture.

2. Support de groupage selon la revendication 1, caractérisée en ce que le crochet d'encliquetage (17) et le crochet de déverrouillage (19) sont disposés à l'extrémité libre de la partie mobile (16) du support de groupage (10) de manière à être tournés dans des directions opposées et que le crochet de déverrouillage (19), en observant en coupe transversale, ait une configuration à peu près en V et présente son ouverture orientée en direction de la paroi de délimitation (13) du support de groupage (10).

3. Support de groupage selon la revendication 1 et 2, caractérisée en ce que sur l'arête de délimitation supérieure de l'oeillet (21) du support de groupage (10) est disposé un ergot de guidage (26) sollicitant le crochet de verrouillage (17) dans la direction de la nervure transversale inférieure (23).

4. Support de groupage selon la revendication 3, caractérisée en ce que le crochet d'encliquetage (17) présente une saillie (24) qui coopère avec l'ergot de guidage (26) lors de l'introduction dans l'oeillet (21).

5. Support de groupage selon l'une ou plusieurs des revendications précédentes, caractérisée en ce que la partie mobile (16) du support de groupage (10) présente au-dessous du crochet d'encliquetage (17), horizontalement, un passage (29) réalisé de préférence sous forme de trou allongé.

6. Support de groupage selon la revendication 5, caractérisée en ce que, lorsque le support de groupage (10) est fermé, le passage (29) de la partie mobile (16) du support de groupage (10) est aligné avec un deuxième passage (30) appartenant à la paroi de fixation (11) placée en regard du support de groupage (10) (figure 7).

7. Support de groupage selon la revendication 1 et 2, caractérisée en ce que le fond (20) du crochet de déverrouillage (19) est utilisable comme contre palier pour produire une force de pressage visant au déverrouillage du crochet de déverrouillage (19).

8. Support de groupage selon l'une ou plusieurs des revendications précédentes, caractérisée en ce que le support de groupage (10) présente dans la paroi de délimitation (13) une zone (33) dégagée qui est alignée avec un échancrure (31) ménagée dans une paroi de délimitation (12) horizontale, placée en regard, du support de groupage (10).

9. Support de groupage selon la revendication 8, caractérisée en ce que tant la zone dégagée (33) qu'également l'échancrure (31) continuent dans la paroi de fixation (11).

10. Support de groupage selon les revendications 8 et 9, caractérisée en ce que le prolongement de l'échancrure (31) s'étend en constituant un agrandissement (32) (figure 5).
